# EUROPÄISCHE PATENTSCHRIFT

(11) **EP 4 302 356 B1**
(45) Veröffentlichungstag und Bekanntmachung des Hinweises auf die Patenterteilung: **23.04.2025**
(21) Anmeldenummer: 22705761.9
(22) Anmeldetag: 09.02.2022
(51) Int. Cl.: H01M 10/42, H01M 10/48

(54) **ÜBERWACHUNGSVORRICHTUNG FÜR EINEN ELEKTRISCHEN ENERGIESPEICHER MIT EINEM FORMTEIL, ELEKTRISCHER ENERGIESPEICHER SOWIE KRAFTFAHRZEUG**
MONITORING DEVICE FOR AN ELECTRIC ENERGY STORAGE DEVICE, COMPRISING A MOLDED PART, ELECTRIC ENERGY STORAGE DEVICE, AND MOTOR VEHICLE
DISPOSITIF DE SURVEILLANCE POUR UN DISPOSITIF DE STOCKAGE D'ÉNERGIE ÉLECTRIQUE, COMPRENANT UNE PIÈCE MOULÉE, DISPOSITIF DE STOCKAGE D'ÉNERGIE ÉLECTRIQUE, ET VÉHICULE MOTORISÉ

(30) Priorität: 05.03.2021 DE 102021105363
(43) Veröffentlichungstag der Anmeldung: 10.01.2024
(73) Patentinhaber: Bayerische Motoren Werke Aktiengesellschaft, 80809 München (DE)
(72) Erfinder: FRANKE, Torsten, 81477 München (DE)
(86) Internationale Anmeldenummer: PCT/EP2022/053061
(87) Internationale Veröffentlichungsnummer: WO 2022/184390

(56) Entgegenhaltungen:
- EP-A1- 3 783 715
- DE-A1- 102019 207 592
- US-A1- 2019 353 714

## Beschreibung

Die Erfindung betrifft eine Überwachungsvorrichtung für zumindest zwei Energiespeicherkomponenten eines elektrischen Energiespeichers, mit einem Wellenleiter, welcher dazu ausgelegt ist, zur Überwachung der Energiespeicherkomponenten akustische und/oder optische Signale zwischen Einrichtungen der Energiespeicherkomponenten und zumindest einem Steuergerät des Energiespeicher zu übermitteln. Der Wellenleiter ist als ein einstückiges Formteil ausgebildet, welches ein Übertragungsnetzwerk ausbildet und welches zumindest einen Sammelkanal zum Anschließen an das zumindest eine Steuergerät und zumindest zwei mit dem zumindest einen Sammelkanal verbundene Anschlusskanäle zum Anschließen an die zumindest zwei Einrichtungen zur Überwachung der Energiespeicherkomponenten aufweist, wobei die akustischen und/oder optischen Signale innerhalb des Formteils über den zumindest einen Sammelkanal und die Anschlusskanäle bidirektional zwischen den Einrichtungen zur Überwachung der Energiespeicherkomponenten und dem zumindest einen Steuergerät übertragbar sind. Die Erfindung betrifft außerdem einen elektrischen Energiespeicher sowie ein Kraftfahrzeug.

Vorliegend richtet sich das Interesse auf elektrische Energiespeicher, welche beispielsweise als Traktionsbatterien für elektrifizierte Kraftfahrzeuge, also Elektro- oder Hybridfahrzeuge, eingesetzt werden können. Solche elektrischen Energiespeicher weisen üblicherweise eine Verschaltung aus mehreren Energiespeicherzellen sowie zumindest ein Steuergerät auf. Zur Überwachung von Energiespeicherkomponenten des Energiespeichers, beispielsweise der Energiespeicherzellen, ist es aus dem Stand der Technik bekannt, dass die Energiespeicherkomponenten und das Steuergerät über Sensoren und Aktoren Signale, beispielsweise Steuersignale und Informationssignale mit zellspezifischen Kenngrößen, austauschen. Die Signalübertragung kann dabei beispielsweise kabelgebunden durchgeführt werden. Nachteilig daran ist jedoch der hohe Aufwand für die Signalübertragung zwischen den mit unterschiedlichem Potential behafteten Sensoren und Aktoren und dem übergeordneten Steuergerät sowie die eingeschränkte Packagebarkeit der dafür genutzten Komponenten. Auch ist es aus dem Stand der Technik, beispielsweise der DE 10 2017 110 326 A1, bekannt, einen Energiespeicher mit Wellenleitern auszustatten, um eine galvanische Trennung zwischen den Sensoren und dem Steuergerät herzustellen.

Die DE 10 2019 207 592 A1 zeigt ein elektrisches Energiespeichersystem umfassend eine Mehrzahl von elektrischen Komponenten mit Datenübertragungseinrichtungen zum optischen Übertragen von Datensignalen von und/oder zu zumindest einer der elektrischen Komponenten, wobei die Datenübertragungseinrichtungen über mindestens einen ringförmigen Lichtwellenleiter miteinander verbunden sind. Außerdem umfasst das Energiespeichersystem mindestens eine als Lichtwellenleiter ausgebildete Einleiteinrichtung zum Einleiten von optischen Datensignalen in den ringförmigen Lichtwellenleiter für jede der Datenübertragungseinrichtungen und mindestens eine als Lichtwellenleiter ausgebildete Ausleiteinrichtung zum Ausleiten von optischen Datensignalen aus dem ringförmigen Lichtwellenleiter für jede der Datenübertragungseinrichtungen, wobei der ringförmige Lichtwellenleiter an jeder der Datenübertragungseinrichtungen mit der mindestens einen Einleiteinrichtung und der mindestens einen Ausleiteinrichtung verbunden ist.

Es ist Aufgabe der vorliegenden Erfindung, einen Wellenleiter zur Signalübertragung eines elektrischen Energiespeichers besonders einfach und kostengünstig auszubilden.

Diese Aufgabe wird erfindungsgemäß durch eine Überwachungsvorrichtung, einen elektrischen Energiespeicher sowie ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung sowie der Figuren.

Eine erfindungsgemäße Überwachungsvorrichtung für zumindest zwei Energiespeicherkomponenten eines elektrischen Energiespeichers weist einen Wellenleiter auf, welcher dazu ausgelegt ist, zur Überwachung der Energiespeicherkomponenten akustische und/oder optische Signale zwischen Einrichtungen der Energiespeicherkomponenten und zumindest einem Steuergerät des elektrischen Energiespeichers zu übermitteln. Der Wellenleiter ist als ein einstückiges Formteil ausgebildet. Das Formteil bildet ein Übertragungsnetzwerk aus und weist dazu zumindest einen Sammelkanal zum Anschließen an das zumindest eine Steuergerät und zumindest zwei mit dem zumindest einen Sammelkanal verbundene Anschlusskanäle zum Anschließen an die Einrichtungen der zumindest zwei Energiespeicherkomponenten auf. Die akustischen und/oder optischen Signale sind innerhalb des Formteils über den Sammelkanal und die Anschlusskanäle bidirektional zwischen den Einrichtungen der Energiespeicherkomponenten und dem zumindest einen Steuergerät übertragbar. Das Formteil weist zum Reduzieren einer Dämpfung des akustischen und/oder optischen Signals zumindest bereichsweise eine Beschichtung aus einem reflektierenden Material auf. Eine solche Beschichtung wird abseits der zur Signaleinkopplung und Signalauskopplung vorgesehenen Bereiche angebracht. Die Beschichtung ist eine Metallisierung.

Zur Erfindung gehört außerdem ein elektrischer Energiespeicher mit zumindest zwei Energiespeicherkomponenten, zumindest einem Steuergerät und einer erfindungsgemäßen Überwachungsvorrichtung. Der elektrische Energiespeicher kann beispielsweise eine wiederaufladbare Traktionsbatterie bzw. ein Traktionsakkumulator sein, welche bzw. welcher als ein Hochvoltenergiespeicher ausgebildet sein kann. Die Energiespeicherkomponenten können beispielsweise Energiespeicherzellen, Verbindungsleitungen, etc. sein. Die Energiespeicherzellen können beispielsweise als prismatische Energiespeicherzellen, Rundzellen oder Pouchzellen ausgebildet sein. Die Energiespeicherkomponenten können gemeinsam mit dem zumindest einen Steuergerät in einem Gehäuseinnenraum eines Energiespeichergehäuses angeordnet sein.

Zur Überwachung der Energiespeicherkomponenten können die Energiespeicherkomponenten Überwachungselemente aufweisen, welche zumindest eine komponentenspezifische Kenngröße, beispielsweise eine Temperatur, eine Zellspannung, eine Zellimpedanz oder einen Zelldruck, erfassen. Diese zumindest eine Kenngröße wird als Signal an das Steuergerät übermittelt. Auch können die Überwachungselemente im Falle von Energiespeicherzellen eine Balancingschaltung zum Durchführen eines Ladezustandsausgleiches zwischen den Energiespeicherzellen oder Trennschalter zum Abtrennen einer defekten Energiespeicherkomponente sein. Diese Überwachungselemente können von dem Steuergerät über Steuersignale angesteuert werden. Die Signalübertragung findet dabei über elektromagnetische Wellen bzw. Licht, also optische Signale, und/oder Schallwellen, also akustische Signale, zwischen den Energiespeicherkomponenten und dem zumindest einen Steuergerät statt. Die Überwachungselemente sind beispielsweise in die Einrichtungen der Energiespeicherkomponenten integriert.

Das Übertragungsmedium ist dabei ein Wellenleiter, welcher als ein einstückiges Formteil ausgebildet ist. Das einteilige Formteil ist dazu ausgelegt, zumindest zwei Energiespeicherkomponenten mit dem zumindest einem Steuergerät potentialfrei zu koppeln und weist dazu den zumindest einen Sammelkanal und die daran angeschlossenen Anschlusskanäle auf. Das Formteil ist dabei ein Fertigteil, welches mit nur einem Montageschritt an den Energiespeicherkomponenten und dem zumindest einen Steuergerät angeordnet werden kann. Das Formteil besteht also nicht aus Einzelteilen, welche miteinander verbunden bzw. verkabelt werden müssen, sondern stellt bereits ein einstückiges Übertragungsnetzwerk zur Signalübertragung bereit. Beim Anordnen des Formteils werden die Anschlusskanäle an den Einrichtungen der Energiespeicherkomponenten angeordnet und der zumindest eine Sammelkanal wird an dem zumindest einen Steuergerät angeordnet.

Vorzugsweise bilden der zumindest eine Sammelkanal und die zumindest zwei Anschlusskanäle ein Übertragungsnetzwerk in Form von einem Busnetzwerk aus. Der Wellenleiter ist also als ein Daten-Bus ausgebildet. Zum Kommunizieren mit dem Steuergerät koppelt eine Einrichtung einer Energiespeicherkomponente ein optisches und/oder akustisches Signal in den zugehörigen Anschlusskanal ein, welches über den Anschlusskanal und den Sammelkanal übertragen wird und am Sammelkanal wieder ausgekoppelt wird. Zum Kommunizieren mit einer Energiespeicherkomponente koppelt das Steuergerät ein optisches und/oder akustisches Signal in den Sammelkanal ein, welches über den Sammelkanal und den Anschlusskanal übertragen wird und am Anschlusskanal der jeweiligen Energiespeicherzelle wieder ausgekoppelt wird. Die Kommunikation findet dabei insbesondere mittels Rohdaten oder über ein Protokoll statt. Jeder Energiespeicherkomponente kann dabei beispielsweise eine spezifische Wellenlänge bzw. ein entsprechendes Signalband der elektromagnetischen Welle und/oder Schallwelle zugeordnet sein.

Insbesondere sind an den zumindest einen Sammelkanal und die zumindest zwei Anschlusskanäle Sendeelemente bzw. Aktoren zur Signalgenerierung und Empfangselemente bzw. Sensoren zum Signalempfang angeschlossen. Im Falle von optischen Signalen sind die Sendeelemente beispielsweise LEDs und die Empfangselemente sind Fotodetektoren. Im Falle von akustischen Signalen sind die Sendeelemente beispielsweise Lautsprecher und die Empfangselemente sind beispielsweise Mikrofone. Die Sende- und Empfangselemente sind Teil der Überwachungsvorrichtung und sind energiespeicherkomponentenseitig insbesondere in die Einrichtungen integriert. Die Einrichtungen können beispielsweise als Single-Chip-Lösungen ausgebildet sein.

Das Formteil kann beispielsweise als ein Hohlkörper ausgestaltet sein, in welchem das Signal per Reflexion an Innenseiten von Wänden des Hohlkörpers übertragen wird. Ein solches Formteil kann ein Rohrsystem sein, bei welchem die rohrartigen Anschlusskanäle von dem rohrartigen Sammelkanal abzweigen. Besonders bevorzugt ist das Formteil als ein Vollkörper ausgebildet, wobei der Vollkörper Flächen bzw. Oberflächenstrukturierungen aufweist, welche Bereiche zur Signaleinkopplung und Signalauskopplung des zumindest einen Sammelkanals und der zumindest zwei Anschlusskanäle ausbilden. Der Vollkörper ist beispielsweise aus einem Kunststoff, beispielsweise Polyacryl, gefertigt. Vorzugsweise ist das Formteil als ein Spritzgussteil ausgebildet. Beispielsweise können Oberflächen des Vollkörpers zum Ausbilden der Oberflächenstrukturierung bereichsweise angeschliffen oder angeätzt werden, um die Bereiche zur Signaleinkopplung und Signalauskopplung auszubilden. Ein solches Formteil kann auf besonders einfache und kostengünstige Weise gefertigt werden.

Es kann vorgesehen sein, dass die zumindest zwei Anschlusskanäle und/oder der zumindest eine Sammelkanal nicht-geradlinig verlaufende Kanalabschnitte aufweisen, welche einen Krümmungswinkel von beispielsweise gleich oder größer 90° aufweisen, durch welche eine Weiterleitung des Signals besondere Ausformungen des Wellenleiters voraussetzt. Um zu gewährleisten, dass das Signal mittels Reflexion weiter geleitet werden kann, weisen die nicht-geradlinig verlaufenden Signalabschnitte Schrägen bzw. Rundungen auf, an welchen das Signal reflektiert und somit durch das Formteil hindurch geführt werden kann. In einer einfachen Ausführung erfolgt die Führung des Signals im Wellenleiter aufgrund unterschiedlicher Materialeigenschaften, z.B. Brechungsindex, von Wellenleiter und Umgebung des Wellenleiters.

Zur Erfindung gehört außerdem ein Kraftfahrzeug mit zumindest einem erfindungsgemäßen elektrischen Energiespeicher. Das elektrifizierte Kraftfahrzeug ist insbesondere ein Personenkraftwagen.

Die mit Bezug auf die erfindungsgemäße Überwachungsvorrichtung vorgestellten Ausführungsformen und deren Vorteile gelten entsprechend für den erfindungsgemäßen elektrischen Energiespeicher sowie für das erfindungsgemäße Kraftfahrzeug.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung einer Ausführungsform eines elektrischen Energiespeichers in einer Draufsicht; und
- Fig. 2: der elektrische Energiespeicher gemäß Fig. 1 in einer Seitenansicht.

In den Figuren sind gleiche sowie funktionsgleiche Elemente mit den gleichen Bezugszeichen versehen.

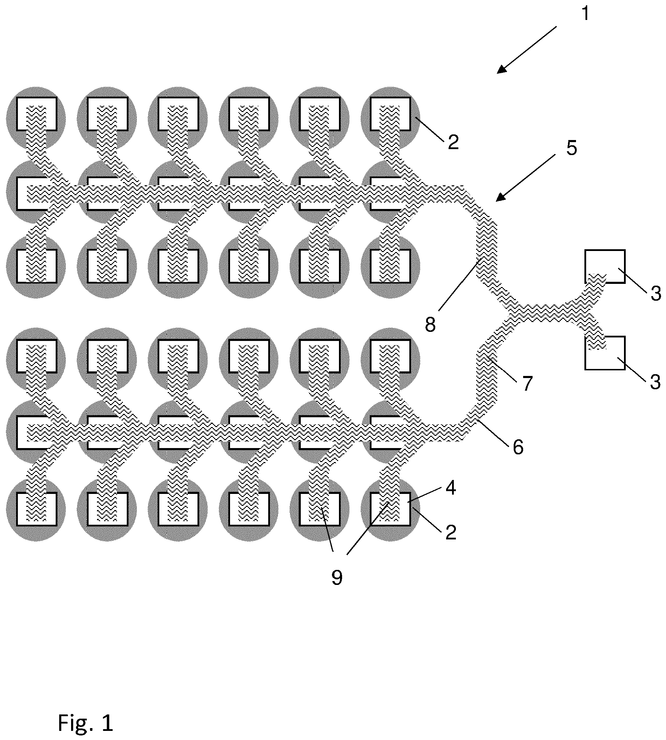

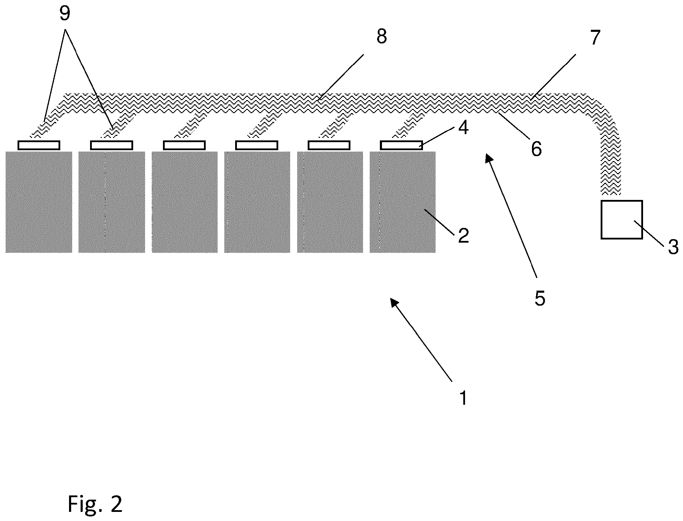

Fig. 1 und Fig. 2 zeigt einen elektrischen Energiespeicher 1, insbesondere für ein elektrisch antreibbares Kraftfahrzeug. Der Energiespeicher 1 weist eine Vielzahl von Energiespeicherkomponenten 2, hier Energiespeicherzellen, auf. Die Energiespeicherzellen 2 sind als Rundzellen ausgebildet und sind zu zwei Zellpaketen verschaltet. Außerdem weist der Energiespeicher 1 hier zwei Steuergeräte 3 auf, welche beispielsweise redundant zueinander ausgebildet sind. Jede Energiespeicherzelle 2 weist eine Einrichtung 4 mit Überwachungselementen auf. Die Überwachungselemente können beispielsweise Spannungssensoren, Temperatursensoren, Impedanzmesser, eine Balancing-Schaltung, ein Lasttrenner oder dergleichen sein. Die Spannungsversorgung dieser Überwachungselemente kann über die jeweilige Energiespeicherzelle 2 erfolgen. Dabei können die Überwachungselemente der Einrichtung 4 auf einem separaten Träger der Einrichtung 4 oder direkt auf oder in den Energiespeicherzellen 2 bzw. anderen zu überwachenden Energiespeicherkomponenten angebracht sein.

Der Energiespeicher 1 weist außerdem eine Überwachungsvorrichtung 5 zum Überwachen der Energiespeicherzellen 2 auf, welche einen Wellenleiter 6 zum Übertragen von Signalen zwischen den Einrichtungen 4 und den Steuergeräten 3 aufweist. Der Wellenleiter 6 ist zum Übertragen von akustischen und/oder optischen Signalen ausgebildet. Im Folgenden wird die Überwachungsvorrichtung 5 hinsichtlich der Realisierung mit Licht, also optischen Signalen, als Informationsträger beschrieben. Die Ausführungen gelten gleichermaßen für eine Realisierung mit Schall, also akustischen Signalen, als Informationsträger. Zur Übertragung der Informationen zwischen den übergeordneten Steuergeräten 3 und den Einrichtungen 4 wird bevorzugt ein Protokoll genutzt. Das Protokoll kann auf bekannten und an die optische Signalübertragung adaptierten Standards (LIN, CAN, WLAN, Bluetooth, NFC, Ethernet, etc.) beruhen. Zur Verbesserung der Signal-Spezifizität können den einzelnen Informationsflüssen der Überwachungsvorrichtung 5 getrennte spektrale Bänder zugewiesen sein.

Der Wellenleiter 6 ist also hier als ein Lichtleiter ausgebildet. Die Überwachungsvorrichtung 5 weist außerdem Sendeelemente bzw. Aktoren zum Aussenden der optischen Signale, beispielsweise LEDs, und Empfangselemente bzw. Sensoren zum Empfangen der optischen Signale, beispielsweise Fotodioden, auf, welche energiespeicherzellenseitig in die Einheiten 4 integriert sein können. In einer besonders vorteilhaften Ausführung sind diese Sendeelemente, die Empfangselemente und die Überwachungselemente einer Energiespeicherzelle 2 als Single-Chip-Lösung ausgebildet. Das Steuergerät 3 weist außerdem eine Speichereinheit zur Speicherung eines Identifiers und erfasster Daten, einen Kommunikationsbaustein zur Generierung und Verarbeitung der zugehörigen Protokolle, einen Signalprozessor zur Verarbeitung der Signale und zum Vergleich mit vorgegebenen oder berechneten Systemsollwerten, eine Kommunikationsschnittstelle zu weiteren Steuergeräten und eine Spannungsversorgung auf.

Die Signalübertragung kann unterschiedliche Modi für den Regelbetrieb und für Betriebsbereiche außerhalb des Regelbetriebs aufweisen. Im Regelbetrieb weist das übergeordnete Steuergerät 3 einzelnen Sensoren bzw. Aktoren oder Gruppen von Sensoren und Aktoren Steuerbefehle zu und ruft die durch Sensoren bzw. Aktoren gesammelten Daten gezielt ab. In Betriebsbereichen außerhalb des Regelbetriebs senden die Sensoren bzw. Aktoren ein Interruptsignal bzw. ein erweitertes Notsignal an das übergeordnete Steuergerät 3, durch welches Sicherheitsroutinen für den weiteren Betrieb des Energiespeichers 1 ausgelöst werden. Die Sicherheitsroutinen können auf die Sensoren bzw. Aktoren wie auch auf weitere Steuergeräte und Elemente wirken und sich entsprechend der Art des Interrupts bzw. erweiterten Notsignales unterscheiden.

Der Wellenleiter 6 ist dabei ein einstückiges Formteil 7. Beispielsweise kann das Formteil 7 ein Spritzgussteil aus einem für den verwendeten Spektralbereich des optischen Signals transparentem Kunststoff sein und den Unterschied des Brechungsindex zwischen dem Kunststoff und dem angrenzenden Material, beispielsweise Luft, für die Lichtführung im Inneren des Formteils 7 nutzen. Das Formteil 7 bildet dabei zumindest einen Daten-Bus, hier aus Redundanzgründen zwei Daten-Busse, aus, welche jeweils einen Sammelkanal 8 und je Einrichtung 4 einen Anschlusskanal 9 aufweisen. Der Sammelkanal 8 ist mit dem jeweiligen Steuergerät 3 verbunden und die Anschlusskanäle 9 zweigen von dem Sammelkanal 8 ab. Der Wellenleiter 6 kann dabei eine Einhausung des jeweiligen Zellpakets durchdringen und die Signale an das außerhalb der Einhausung angeordnete Steuergerät 3 weiterleiten. Dabei kann vorgesehen sein, dass das Formteil 7 zur Verminderung der Signaldämpfung an den nicht für einen Lichtdurchtritt vorgesehenen Flächen verspiegelt ist. Ein solches einstückiges Formteil 7 kann auf einfache und kostengünstige Weise gefertigt und ohne Verkabelungsaufwand an den Einrichtungen 4 und den Steuergeräten 3 montiert werden. Dabei kann die Montage des einstückigen Formteils 7 zu den jeweiligen Einrichtungen 4 sowie dem Steuergerät 3 beabstandet, formschlüssig oder adhäsiv, z.B. durch einen transparenten Klebstoff, erfolgen.

## Patentansprüche

1. Überwachungsvorrichtung (5) für zumindest zwei Energiespeicherkomponenten (2) eines elektrischen Energiespeichers (1), mit einem Wellenleiter (6), welcher dazu ausgelegt ist, zur Überwachung der Energiespeicherkomponenten (2) akustische und/oder optische Signale zwischen Einrichtungen (4) der Energiespeicherkomponenten (2) und zumindest einem Steuergerät (3) des elektrischen Energiespeicher (1) zu übermitteln, wobei der Wellenleiter (6) als ein einstückiges Formteil (7) ausgebildet ist, welches ein Übertragungsnetzwerk ausbildet und welches zumindest einen Sammelkanal (8) zum Anschließen an das zumindest eine Steuergerät (3) und zumindest zwei mit dem zumindest einen Sammelkanal (8) verbundene Anschlusskanäle (9) zum Anschließen an die zumindest zwei Einrichtungen (4) zur Überwachung der Energiespeicherkomponenten (2) aufweist, wobei die akustischen und/oder optischen Signale innerhalb des Formteils (7) über den zumindest einen Sammelkanal (8) und die Anschlusskanäle (9) bidirektional zwischen den Einrichtungen (4) zur Überwachung der Energiespeicherkomponenten (2) und dem zumindest einen Steuergerät übertragbar sind,
**dadurch gekennzeichnet, dass**
das Formteil (7) zum Reduzieren einer Dämpfung des akustischen und/oder optischen Signals zumindest bereichsweise eine Beschichtung aus einem reflektierenden Material in Form von einer Metallisierung aufweist.

2. Überwachungsvorrichtung (5) nach Anspruch 1,
**dadurch gekennzeichnet, dass**
der zumindest eine Sammelkanal (8) und die zumindest zwei Anschlusskanäle (9) ein Übertragungsnetzwerk in Form von einem Busnetzwerk ausbilden.

3. Überwachungsvorrichtung (5) nach Anspruch 1 oder 2,
**dadurch gekennzeichnet, dass**
das Formteil (7) als ein Vollkörper ausgebildet ist, wobei der Vollkörper Oberflächenstrukturierungen aufweist, welche Bereiche zur Signaleinkopplung und Signalauskopplung des zumindest einen Sammelkanals (8) und der zumindest zwei Anschlusskanäle (9) ausbilden.

4. Überwachungsvorrichtung (5) nach Anspruch 3,
**dadurch gekennzeichnet, dass**
das Formteil (7) als ein Spritzgussteil ausgebildet ist.

5. Überwachungsvorrichtung (5) nach einem der vorhergehenden Ansprüche,
**dadurch gekennzeichnet, dass**
das Formteil (7) aus einem Kunststoff, insbesondere PMMA, gefertigt ist.

6. Überwachungsvorrichtung (5) nach einem der vorhergehenden Ansprüche,
**dadurch gekennzeichnet, dass**
die zumindest zwei Anschlusskanäle (9) und/oder der zumindest eine Sammelkanal (8) nicht-geradlinig verlaufende Kanalabschnitte aufweisen, welche einen Krümmungswinkel aufweisen.

7. Überwachungsvorrichtung (5) nach einem der vorhergehenden Ansprüche,
**dadurch gekennzeichnet, dass**
die Überwachungsvorrichtung (5) Sendeelemente zur Signalgenerierung und Empfangselemente zum Signalempfang aufweist, welche an den zumindest einen Sammelkanal (8) und die zumindest zwei Anschlusskanäle (9) angeschlossen sind und welche energiespeicherkomponentenseitig in die Einrichtungen (4) integrierbar sind.

8. Elektrischer Energiespeicher (1) mit zumindest zwei Energiespeicherkomponenten (2), zumindest einem Steuergerät (3) und zumindest einer Überwachungsvorrichtung (5) nach einem der vorhergehenden Ansprüche.

9. Kraftfahrzeug mit zumindest einem elektrischen Energiespeicher (1) nach Anspruch 8.

## Claims

1. Monitoring device (5) for at least two energy storage components (2) of an electric energy storage device (1), comprising a waveguide (6) which is designed to transmit acoustic and/or optical signals between units (4) of the energy storage components (2) and at least one controller (3) of the electric energy storage device (1) to monitor the energy storage components (2), wherein the waveguide (6) is designed as a one-piece molded part (7), which forms a transmission network and which includes at least one collection channel (8) for connection to the at least one controller (3) and at least two connection channels (9) connected to the at least one collection channel (8) for connection to the at least two units (4) for monitoring the energy storage components (2), wherein the acoustic and/or optical signals are transmittable within the molded part (7) via the at least one collection channel (8) and the connection channels (9) bidirectionally between the units (4) for monitoring the energy storage components (2) and the at least one controller, **characterized in that**
the molded part (7) includes a coating made of a reflective material in the form of a metallization at least in some areas to reduce damping of the acoustic and/or optical signal.

2. Monitoring device (5) according to Claim 1,
**characterized in that**
the at least one collection channel (8) and the at least two connection channels (9) form a transmission network in the form of a bus network.

3. Monitoring device (5) according to Claim 1 or 2,
**characterized in that**
the molded part (7) is formed as a solid body, wherein the solid body includes surface structures, which form areas for signal coupling and signal decoupling of the at least one collection channel (8) and the at least two connection channels (9).

4. Monitoring device (5) according to Claim 3,
**characterized in that**
the molded part (7) is formed as an injection molded part.

5. Monitoring device (5) according to any one of the preceding claims, **characterized in that**
the molded part (7) is manufactured from a plastic, in particular PMMA.

6. Monitoring device (5) according to any one of the preceding claims, **characterized in that**
the at least two connection channels (9) and/or the at least one collection channel (8) include channel sections extending nonlinearly, which include an angle of curvature.

7. Monitoring device (5) according to any one of the preceding claims, **characterized in that**
the monitoring device (5) includes transmitting elements for signal generation and receiving elements for signal reception, which are connected to the at least one collection channel (2) and the at least two connection channels (9) and which can be integrated on the energy storage component side in the units (4).

8. Electric energy storage device (1) comprising at least two energy storage components (2), at least one controller (3), and at least one monitoring device (5) according to any one of the preceding claims.

9. Motor vehicle comprising at least one electric energy storage device (1) according to Claim 8.

## Revendications

1. Dispositif de surveillance (5) pour au moins deux composants de dispositif de stockage d'énergie (2) d'un dispositif de stockage d'énergie électrique (1), comprenant un guide d'ondes (6) qui est conçu pour transmettre des signaux acoustiques et/ou optiques entre des dispositifs (4) des composants de dispositif de stockage d'énergie (2) pour surveiller les composants de dispositif de stockage d'énergie (2) et au moins un dispositif de commande (3) du dispositif de stockage d'énergie électrique (1), le guide d'ondes (6) étant conçu sous la forme d'une pièce moulée monobloc (7) qui forme un réseau de transmission et qui présente au moins un canal collecteur (8) destiné à être relié audit au moins un dispositif de commande (3) et au moins deux canaux de raccordement (9) reliés audit au moins un canal collecteur (8) et destinés à être reliés auxdits au moins deux dispositifs (4) pour surveiller les composants de dispositif de stockage d'énergie (2), les signaux acoustiques et/ou optiques pouvant être transmis de manière bidirectionnelle à l'intérieur de la pièce moulée (7) par l'intermédiaire dudit au moins un canal collecteur (8) et des canaux de raccordement (9) entre les dispositifs (4) de surveillance des composants de dispositif de stockage d'énergie (2) et ledit au moins un dispositif de commande,
**caractérisé en ce que**
la pièce moulée (7) présente au moins par zones un revêtement constitué d'un matériau réfléchissant sous la forme d'une métallisation pour réduire une atténuation du signal acoustique et/ou optique.

2. Dispositif de surveillance (5) selon la revendication 1,
**caractérisé en ce que**
ledit au moins un canal collecteur (8) et lesdits au moins deux canaux de raccordement (9) forment un réseau de transmission sous la forme d'un réseau de bus.

3. Dispositif de surveillance (5) selon la revendication 1 ou 2,
**caractérisé en ce que**
la pièce moulée (7) est conçue sous la forme d'un corps plein, le corps plein présentant des structurations de surface qui forment des zones destinées au couplage de signaux et au découplage de signaux dudit au moins un canal collecteur (8) et desdits au moins deux canaux de raccordement (9).

4. Dispositif de surveillance (5) selon la revendication 3,
**caractérisé en ce que**
la pièce moulée (7) est conçue sous la forme d'une pièce moulée par injection.

5. Dispositif de surveillance (5) selon l'une quelconque des revendications précédentes,
**caractérisé en ce que**
la pièce moulée (7) est fabriquée à partir d'une matière plastique, en particulier du PMMA.

6. Dispositif de surveillance (5) selon l'une quelconque des revendications précédentes,
**caractérisé en ce que**
lesdits au moins deux canaux de raccordement (9) et/ou ledit au moins un canal collecteur (8) présentent des parties de canal s'étendant de manière non rectiligne, qui présentent un angle de courbure.

7. Dispositif de surveillance (5) selon l'une quelconque des revendications précédentes,
**caractérisé en ce que**
le dispositif de surveillance (5) présente des éléments d'émission destinés à générer des signaux et des éléments de réception destinés à recevoir des signaux, qui sont raccordés audit au moins un canal collecteur (8) et auxdits au moins deux canaux de raccordement (9) et qui peuvent être intégrés dans les dispositifs (4) du côté des composants de dispositif de stockage d'énergie.

8. Dispositif de stockage d'énergie électrique (1) comprenant au moins deux composants de dispositif de stockage d'énergie (2), au moins un dispositif de commande (3) et au moins un dispositif de surveillance (5) selon l'une quelconque des revendications précédentes.

9. Véhicule automobile comprenant au moins un dispositif de stockage d'énergie électrique (1) selon la revendication 8.
